# EUROPEAN PATENT APPLICATION

(11) **EP 1 320 223 A2**
(43) Date of publication of application: **18.06.2003**
(21) Application number: 02027651.5
(22) Date of filing: 12.12.2002
(51) Int. Cl.: H04L 12/433, H04L 12/56

(54) **Signaling for congestion control, Load Balancing, and fairness in a resilient packet ring**

(30) Priority: 13.12.2001 US 20619
(71) Applicant: ALCATEL, 75008 Paris (FR)
(72) Inventor: Kamakshi, Sridhar, Plano, Texas 75093 (US)
(74) Representative: Dreiss, Fuhlendorf, Steimle & Becker

(57) **Abstract**

An in-band signaling mechanism for detecting and correcting congestion, load imbalance, and lack of fairness problems in an resilient packet ring ("RPR") network, including a Wavelength Division Multiplex RPR ("WDMRPR") network, is disclosed. The signaling mechanism comprises including unique signaling fields in the RPR header of bearer packets sent on the RPR network. In one embodiment, the signaling fields include fairness specific fields that are used only for the purposes of implementing fairness amongst the nodes of the RPR, load balancing specific fields that are used only for the purposes of detecting load imbalance and implementing load balancing between the rings, congestion control specific fields that are used only for the purposes of detecting and relieving congestion on a ring, and common fields that are used by any of the aforementioned functions.

## Description

### BACKGROUND OF THE INVENTION

### Technical Field of the Invention

The present invention generally relates to resilient packet rings ("RPRs") and wavelength division multiplex RPRs ("WDMRPRs"). More particularly, and not by way of any limitation, the present invention is directed to a system and method for providing signaling for congestion control, load balancing, and fairness in an RPR or a WDMRPR.

### Description of Related Art

Resilient Packet Ring ("RPR") is a packet-based technology designed primarily for implementing metropolitan area networks ("MANs") Wavelength Division Multiplex RPR ("WDMRPR") is an RPR with multiple wavelengths per ring. Each ring is unidirectional, as in RPR. The basic topology of RPR is a dual counter-rotating ring in which both rings transport both data and control packets. RPR technology includes a Medium Access Control ("MAC") mechanism that controls access to the RPR and to the WDMRPR. It should be noted that, even where not explicitly stated, it should be assumed throughout this document that the teachings described herein apply both to RPRs as well as to WDMRPRs. Additionally, the term "RPR" is defined to include both RPRs, as well as WDMRPRs.

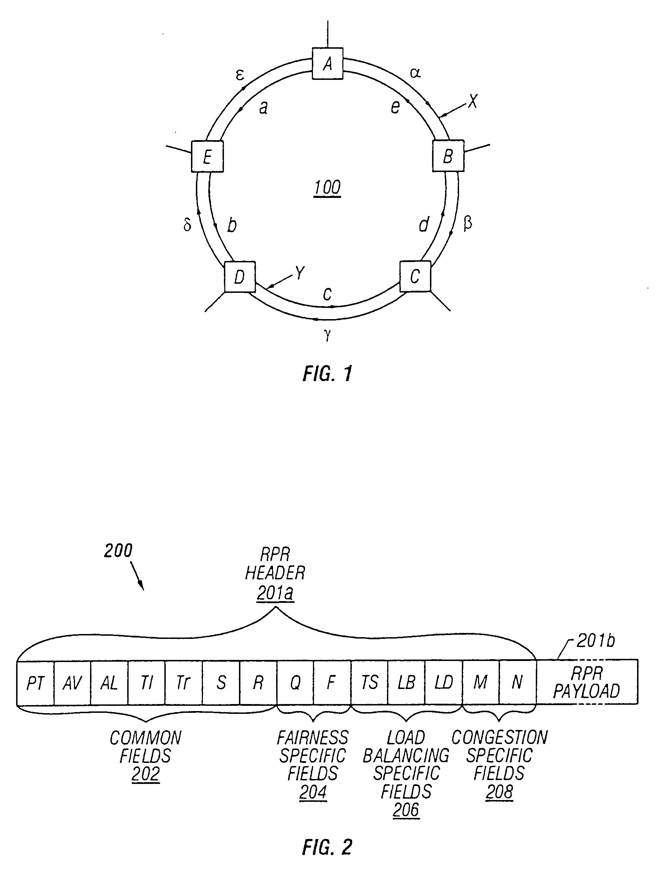

FIG. 1 is an example RPR network 100 consisting of five nodes, respectively designated A-E, and two rings, illustrated in FIG. 1 as an outer ring X and an inner ring Y. Each node A-E is connected to its adjacent nodes via at least two links; one on the inner ring and one on the outer ring. Links on the inner ring are designated a-e, while links on the outer ring are designated α-ε. Accordingly, nodes A and B are connected by links α and e, nodes B and C are connected by links β and d, nodes C and D are connected by links γ and c, nodes D and E are connected by links δ and b, and nodes E and A are connected by links ε and a. Information is carried in one and only one direction on a ring, either clockwise or counter-clockwise. As illustrated in FIG. 1, the outer ring X carries data and control packets in the clockwise direction and the inner ring Y carries data and control packets in the counter-clockwise direction. Features of RPR include spatial reuse and destination stripping, fast protection, media independent MAC, support for layer 2 devices (e.g., Ethernet switches) and layer 3 devices (e.g., routers).

RPR operates as a distributed switch at layer 2. Alternatives to RPR include SONET/SDH rings and Ethernet switches. The former, implemented with routers, is expensive and inefficient for dynamic traffic patterns; however, it provides efficient protection. The latter offers no protection bandwidth or fairness, but does provide efficient bandwidth utilization. Moreover, in contrast to layer 3 devices, RPR has ring awareness. RPR, therefore, is intended to embody the best features of both SONET and Ethernet switches, that is,bandwidth efficiency, fairness, and fast protection. To realize these features, the RPR should provide a basic ring access mechanism, additional mechanisms to provide satisfactory performance for traffic transiting the ring, and appropriate protection features.

Several RPR terms and concepts will now be defined. Referring again to FIG. 1, assume that traffic destined for node D enters the ring at node A and passes through nodes B and C. Node A is referred to as the "ingress node", node D is referred to as the "egress node", and nodes B and C are referred to as "intermediate nodes." As previously noted, the fiber connecting two nodes is referred to as a "link". In a WDMRPR, the wavelength connecting two nodes is referred to as a link. From the perspective of nodes B and C, traffic from node A is "ring traffic". Traffic entering node B or C is referred to as "tributary traffic," with respect to node A traffic.

At the ingress node, as soon as a flow is admitted to the RPR, an RPR header is created and attached to every packet within the flow. The RPR header contains a Class of Service ("CoS") marking, a preemption bit, a ring identifier, and a destination MAC address. Each intermediate node will examine the incoming packet and perform an address lookup. If the packet is destined for the current node, it is taken off the ring at that node. If it is destined for some other node, it is placed back on to the ring.

There are several issues to be addressed in connection with RPR architecture design, including congestion, load imbalance, and lack of fairness. Congestion is caused by the admittance of excessive traffic onto the RPR, resulting in unacceptable delays to traffic already present on a link.

Load imbalance is defined as the concurrent overutilization of capacity on one or more links in the RPR and the underutilization of capacity of other links in the RPR. Load imbalance can be illustrated as follows. Referring again to FIG. 1, traffic going from node A to node B can travel either on the outer ring, via link α, or on the inner ring via links a, b, c, and d. For obvious reasons, traffic will tend to take the link α, since it is the more direct route. In the absence of any other traffic on the RPR, the link α will be overutilized, while the other links will be underutilized. The solution is to "load balance" the traffic between the links so that packets of a given class will experience approximately the same delay regardless of what the shortest path is.

Finally, fairness refers to how bandwidth is allocated to the different flows within a traffic class so that all traffic flows can avail themselves of their share of the link bandwidth. Lack of fairness results from traffic from upstream nodes "starving" the traffic of the same class from downstream nodes. For example, referring to FIG. 1, assume that all of the links are 2 Gbps links. Assume further that traffic for a given class enters node A at 0.8 Gbps, destined for node D via links α-β-γ and that traffic for the same class subsequently enters node B at 0.9 Gpbs, destined for node D via links β-γ. In this case, only 0.3 Gbps will be available for traffic entering node C and destined for node D via the link γ. Accordingly, there is a lack of fairness amongst nodes for traffic of a given class, even though all of the flows within the same class have the same priority.

Load balancing and lack of fairness issues are unique to RPR architecture and there is currently no well-accepted solution to the problem of load imbalance in an RPR. With respect to fairness, the existing solution is to provide a counter at each node to keep track of traffic rate at each node for each class. With regard to congestion control, the existing solution is to use Layer 3 congestion control mechanisms. Clearly, these are not acceptable long-term solutions to the above-described problems inherent in RPR architecture design.

### SUMMARY OF THE INVENTION

Accordingly, the present invention advantageously provides a solution that implements an in-band signaling mechanism for detecting and correcting congestion, load imbalance, and lack of fairness problems in an resilient packet ring ("RFR") network. The signaling mechanism comprises including unique signaling fields in the RPR header of bearer packets sent on the RPR network. In one embodiment, the signaling fields include fairness specific fields that are used only for the purposes of implementing fairness amongst the nodes of the RPR, load balancing specific fields that are used only for the purposes of detecting load imbalance and implementing load balancing between the rings, congestion control specific fields that are used only for the purposes of detecting and relieving congestion on a ring, and common fields that are used by any of the aforementioned functions.

In one aspect, the invention comprises a method of implementing an in-band signaling mechanism for detecting and correcting congestion, load imbalance, and lack of fairness in an RPR network comprising a plurality of nodes and first and second counter-rotating rings each comprising a plurality of links for carrying information between the nodes, the method comprising the step of including in each packet transmitted on the RPR network a header comprising at least one fairness specific field for use in detecting and correcting lack of fairness among the nodes, at least one load balancing specific field for use in detecting and correcting load imbalances between the rings, at least one congestion control specific field for use in detecting and alleviating congestion on a ring, and at least one common field for use in detecting and correcting lack of fairness, load imbalance, and congestion in the RPR.

In another aspect, the invention comprises a method of implementing an in-band signaling mechanism for detecting and correcting congestion on a first ring of an RPR network. The method comprises the steps of, for each nth packet of a flow of a first class of service at a first node: time stamping the packet with a first time indicative of a time the packet is sent to a second node; sending the packet to the second node on a first link between the first and second nodes, the first link comprising a portion of the first ring; upon receipt by the second node of the packet, time stamping the packet with a second time indicative of a time the packet was received at the second node; calculating a difference between the first and second times; and, responsive to the difference being greater than a predetermined threshold, signaling to the first node that congestion has been detected on the first link between the first and second nodes.

In another aspect, the invention comprises a method of implementing an in-band signaling mechanism for detecting and correcting load imbalance between first and second counter-rotating rings of an RPR network comprising a plurality of nodes. The method comprises the steps of: time stamping a packet at a first node with a first time value indicative of a time the packet is sent from the first node to a second node via the first ring; sending the packet to the second node via the first ring; at the second node, time stamping the packet with a second time value indicative of a time the packet is received by the second node via the first ring; returning the packet to the first node via the second ring; at the first node, recording a difference between the first and second time values; time stamping the packet at the first node with a third time value indicative of a time the packet is sent from the first node to the second node via the second ring; sending the packet to the second node via the second ring; at the second node, time stamping the packet with a fourth time value indicative of a time the packet is received by the second node via the second ring; returning the packet to the first node via the first ring; at the first node, recording a difference between the third and fourth time values; and responsive to a determination that an absolute value of the difference between the third and fourth time values is less than an absolute value of the difference between the first and second time values, signaling a bandwidth broker ("BB") to perform load balancing between the first and second rings.

In yet another aspect, the invention comprises a method of using an in-band signaling mechanism for detecting and correcting a lack of fairness between an upstream node and a downstream node with respect to traffic of a first class of service in an RPR network comprising first and second two counter-rotating rings. The method comprises the steps of: causing a bandwidth broker ("BB") to increase the allocated bandwidth and number of admissible flows for the first class of service at the downstream node; and signaling the upstream node to reduce the amount of traffic of the first class of service being sent from the upstream node to the downstream node.

In a further aspect, the invention comprises an in-band signaling mechanism for detecting and correcting congestion on a first ring of an RPR network, the mechanism comprising means for time stamping each nth packet of a flow of a first class of service at a first node with a first time indicative of a time the packet is sent to a second node; means for sending the packet to the second node on a first link between the first and second nodes, the first link comprising a portion of the first ring; means for time stamping the packet with a second time indicative of a time the packet was received at the second node upon receipt by the second node of the packet; means for calculating a difference between the first and second times; and means responsive to the difference being greater than a predetermined threshold for signaling to the first node that congestion has been detected on the first link between the first and second nodes.

In a still further aspect, the invention comprises an in-band signaling mechanism for detecting and correcting load imbalance between first and second counter-rotating rings of an RPR network comprising a plurality of nodes, the mechanism comprising means for time stamping a packet at a first node with a first time value indicative of a time the packet is sent from the first node to a second node via the first ring; means for sending the packet to the second node via the first ring; means for time stamping the packet with a second time value indicative of a time the packet is received by the second node via the first ring; means for returning the packet to the first node via the second ring; means for recording a difference between the first and second time values; means for time stamping the packet at the first node with a third time value indicative of a time the packet is sent from the first node to the second node via the second ring; means for sending the packet to the second node via the second ring; means for time stamping the packet with a fourth time value indicative of a time the packet is received by the second node via the second ring; means for returning the packet to the first node via the first ring; means for recording a difference between the third and fourth time values; and means responsive to a determination that an absolute value of the difference between the third and fourth time values is less than an absolute value of the difference between the first and second time values for signaling a bandwidth broker ("BB") to perform load balancing between the first and second rings.

In yet another aspect, the invention comprises an in-band signaling mechanism for detecting and correcting a lack of fairness between an upstream node and a downstream node with respect to traffic of a first class of service in an RPR network comprising first and second two counter-rotating rings. The mechanism comprises means for causing a bandwidth broker ("BB") to increase the allocated bandwidth and number of admissible flows for the first class of service at the downstream node; and means for signaling the upstream node to reduce the amount of traffic of the first class of service being sent from the upstream node to the downstream node.

### BRIEF DESCRIPTION OF THE DRAWINGS

A more complete understanding of the present invention may be had by reference to the following Detailed Description when taken in conjunction with the accompanying drawings wherein:

FIG. 1 depicts an exemplary RPR network arrangement in which teachings of the present invention may be advantageously practiced;

FIG. 2 depicts an RPR packet for implementing a signaling mechanism according to the teachings of the present invention;

FIG. 3 depicts a block diagram of an exemplary and presently preferred embodiment of a single node of an RPR network in which teachings of the present invention may be advantageously practiced;

FIG. 4 depicts a flowchart of an exemplary congestion detection and correction feature for implementation in an RPR network in accordance with the teachings of the present invention.

FIG. 5 depicts a flowchart of an exemplary load imbalance detection and correction feature for implementation in an RPR network in accordance with the teachings of the present invention; and

FIG. 6 depicts a flowchart of an exemplary lack of fairness detection and correction feature for implementation in an RPR network in accordance with the teachings of the present invention.

### DETAILED DESCRIPTION OF THE DRAWINGS

In the drawings, like or similar elements are designated with identical reference numerals throughout the several views thereof, and the various elements depicted are not necessarily drawn to scale. Referring again to FIG. 1, depicted therein is an exemplary RPR network 100 in which the teachings of the present invention may be advantageously practiced. It should be recognized that, although the RPR network 100 comprises five nodes A-E, in general, there can be more or fewer nodes on the network 100. Moreover, although each of the nodes A-E are illustrated as being connected to its adjacent nodes by only two links, it should be recognized that the principles of the invention described herein can be applied to an RPR comprising more than two rings, and therefore more than two links between adjacent nodes. It should also be recognized that the principles of the present invention are also applicable to multiple wavelengths in a WDMRPR.

As previously indicated, the present invention comprises an in-band signaling mechanism for implementing congestion, load-balancing, and lack of fairness detection and control in an RPR, such as the RPR 100. The signaling mechanism is implemented by including unique signaling fields in the RPR header that is appended to each packet on the RPR such that information concerning congestion, load-balancing, and lack of fairness can be piggybacked on bearer packets traversing the RPR.

FIG. 2 illustrates an RPR packet 200 comprising RPR payload 201b and an RPR header 201a for implementing the teachings of the present invention. As illustrated in FIG. 2, the RPR header 201a includes a plurality of common fields 202, a plurality of fairness specific fields 204, a plurality of load balancing specific fields 206, and a plurality of congestion control specific fields 208.

The common fields 202 include a PT field, which is a one-byte field indicating class type, an AV field, which indicates the available bandwidth for a given class, an AL field, which indicates the allocated bandwidth for a given class, a Tl field, which indicates the time the packet left a first node, a Tr field, which indicates the time the packet was received at a second node, an S field, which is a one-bit field that, when set to 1, indicates that the packet is to be time-stamped for a given class, and an R field, which is a one-bit field that, when set to 1, indicates that the packet has been received on the counter ring.

The fairness specific fields 204 include a Q field, which is a one-bit field that, when set to 1, indicates that the signal needs to be sent on the reverse link to reduce flow rate for each flow, and an F field, which indicates the number of flows belonging to a class specified in the PT field.

The load balancing fields 206 include a TS field, which is a one-bit field that, when set to 1, indicates that the packet is a test packet, an LB field, which is a one-bit field that, when set to 1, indicates that the packet must be inspected for load-balancing purposes, and an LD field, which is a two-bit field for indicating failure on one or more links connected to the node.

The congestion control specific fields 208 include an M field, which is a one-bit field that, when set to 1, indicates that congestion has set in for a given class, and an N field, which holds a value n that controls the frequency with which packets are marked by a node for a given class, with each nth packet being marked.

Fairness specific fields 204 are fields that are used only for the purposes of implementing fairness amongst the nodes in accordance with the teachings of the present invention. Load balancing specific fields 206 are fields that are used only for the purposes of detecting load imbalance and implementing load balancing between the rings in accordance with the teachings of the present invention. Congestion control specific fields 208 are fields that are used only for the purposes of detecting and relieving congestion on a ring. Common fields 202 are fields that may be used by any of the aforementioned functions. It should be noted that, in addition to the fields described herein, there may be other common fields that are not required for implementing the present invention, but that are common to RPR protocol. Those fields will not be further described herein.

The signaling mechanism described herein can be applied irrespective of the number of RPR classes, the number of nodes, or the number of rings, so long as the number of rings is greater than or equal to two. Similarly, the signaling mechanism can be applied to a WDMRPR in which the number of wavelengths is greater than or equal to two.

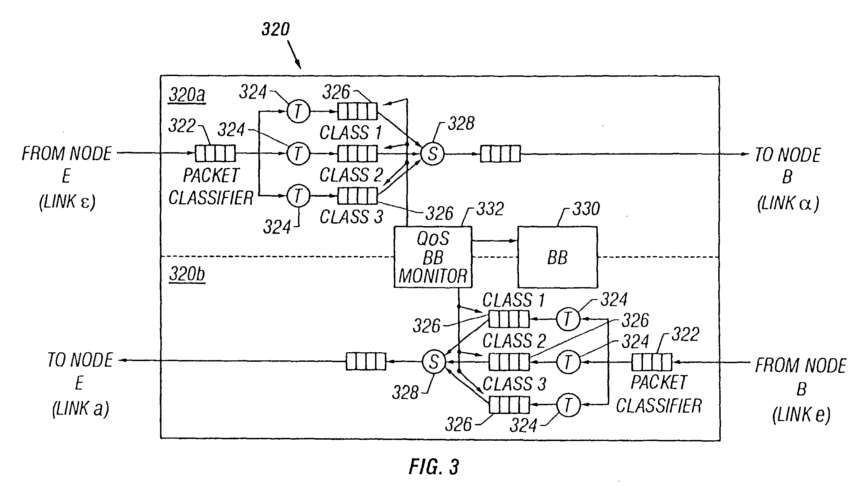

FIG. 3 illustrates an exemplary and presently preferred embodiment of a single node 320 within an RPR. The embodiment illustrated in FIG. 3 is described in greater detail in commonly-assigned U.S. Patent Application Serial No. (Atty. Docket No. 1285-0079US), filed , entitled LOAD BALANCING TECHNIQUE FOR A RESILIENT PACKET RING, which is hereby incorporated by reference in its entirety. For purposes of discussion, it will be assumed that traffic flows are classified into three classes of service: Class 1 (highest priority), Class 2 (medium priority), and Class 3 (lowest priority). The principles described herein apply to more or fewer numbers of classes, to alternative definitions of such classes, and to any class of service.

In general, as illustrated in FIG. 3, packets entering a node are classified by a packet classifier 322 into one of the three classes. Packets of each class are shaped by a respective token bucket policer 324 depending on various token bucket ("TB") parameters (e.g., peak data rate and maximum burst size). Packets may be dropped if the traffic rate is excessive. Once shaped, packets are put into respective class based queues ("CBQs") 326 and drained from the CBQs 326 depending on the CBQ parameter specification of how many packets of each class can be serviced by a scheduler 328 at each service rotation. The CBQ and TB parameters together comprise the quality of service ("QoS") parameters. A bandwidth broker ("BB") 330 located at a higher layer (e.g., layer 3) is responsible for bandwidth allocation to each class for a particular link. The BB parameters per class include allocated bandwidth, used bandwidth, and available bandwidth. The allocated bandwidth for a class refers to the total bandwidth available for that class on a link. Of this, only a portion of the bandwidth is used by the various flows. The difference between allocated bandwidth and used bandwidth is the available bandwidth for that class on that link. The sum of the allocated bandwidths for all classes equals the useful link capacity.

In accordance with features of the invention described in the above-noted patent application, in a preferred embodiment, a QoS/BB monitor 332 is implemented on every node, including the node 320. The monitor 332 is common to all the rings of an RPR and monitors the traffic performance for each class on each ring at the node. With this knowledge, it can change the QoS parameters of each class on each link, one at a time, for a particular traffic class. Likewise, the BB parameters may also be changed. Changes to the QoS parameters and BE parameters are made as described in detail below.

Assuming for the sake of example that the node 320 is node A of the RPR 100 (FIG. 1), in a top portion 320a of the node 320, the QoS parameters are applied to traffic on link α between nodes A and B and in a bottom portion 320b of the node 320, the QoS parameters are applied to traffic on link a between nodes A and E. Likewise, the BB parameters are also applied to the two links, even though the BB 330 is shown as a single entity for simplicity.

It will be recognized that the QoS parameters and BB parameters may differ from link to link, such that the parameters for the link a between nodes A and E may be different than those for the link α between nodes A and B because the rings in an RPR operate independently of one another.

### Congestion Control Detection and Correction

As previously described, the problem of congestion is that excessive traffic admitted on the RPR layer may cause unacceptable delays to traffic already present on a link. This affects the quality of service of the traffic on the RPR. The solution is to detect congestion and signal to the source to reduce the source rate or throttle the peak data rate at the RPR layer.

It will be assumed for the sake of example that, as illustrated in FIG. 3, token bucket policers are implemented at the RPR layer, to limit the peak data rate per traffic class entering the scheduler at the RPR layer. It will also be assumed that there is synchronization between the various nodes through a common clock that provides a time base.

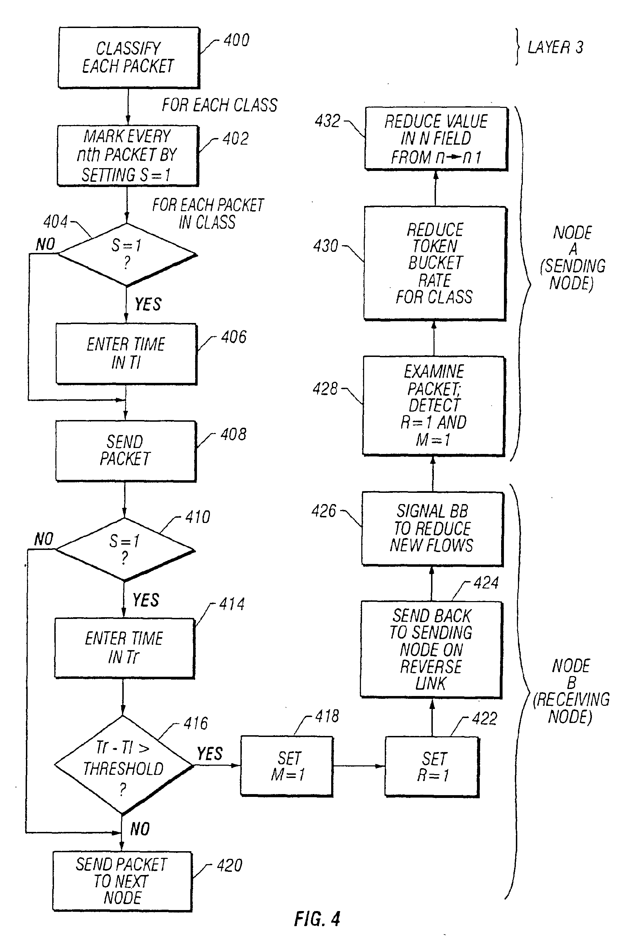

FIG. 4 is a flow chart illustrating operation of the
congestion detection and correction feature of the signaling mechanism of the present invention. It will be assumed for the sake of example that packets are being sent from node A to node B via link α. In step 400, a packet classifier, implemented at layer 3, classifies every packet of every flow into a class. In step 402, at the RPR layer, every nth packet of a class, as indicated by the value in the N field (FIG. 2), is marked by setting the S field to 1. In step 404, if it is determined that S=1 for a packet, node A inserts the time in the Tl field for the packet in step 406. In step 408, the packet is sent to node B.

In step 410, node B examines the RPR header of the received packet and determines whether S=1. If so, node B examines the packet and inserts the time in the Tr field for the packet in step 414. In step 416, node B determines whether Tr-Tl is greater than some predetermined threshold. If so, node B infers that the delay is unacceptable and that congestion has been detected on link α. Execution then proceeds to step 418, in which the M field is set to 1 to indicate that congestion has been detected. If in step 416 node B determines that Tr-Tl is not greater than some predetermined threshold, execution proceeds to step 420, in which the packet is forwarded on to node C on link β.

In step 422, after the M field has been set to 1 (step 418), the R field is set to 1 to indicate that the packet is being sent back to the sending node (node A) on the reverse link. This provides a feedback to the sending node that the downstream node (node B) is seeing congestion for that class on that link. In step 424, the packet is inserted on the appropriate queue on the reverse link e and sent back to node A. In step 426, node B signals the BB 330 (FIG. 3) to reduce the available bandwidth, as indicated in the AV field, for that class to reduce the number of new flows being admitted by the BB on the link α.

In step 428, node A examines the packet sent by node B on the link e and determines that the M and R fields have both been set to 1, indicating that the packet has arrived on the reverse link of a link that is congested. In step 430, node A reduces the token bucket rate for that class by some value (e.g., ½). In step 432, node A also reduces the value stored in the N field from n to n1, where n1<n, for link α for the class, thereby ensuring quicker congestion detection in the future. It should be noted that node A will insert the new value for n (i.e., nl) in the N field of the header of other packets exiting the node. If congestion is not subsequently detected for some period of time on a node, the node can gradually increase the value stored in the N field back to the original value. Likewise, the token bucket rate can gradually be increased at preset intervals.

It may be presumed that if there is congestion on a link, then adjacent links are also likely to be congested. Optionally, therefore, the node that detects congestion (node B in the above-described example), can also reduce its token bucket rate to some predetermined value, to relieve RPR congestion, if any, on the downstream link β. This new token bucket rate will be used by new incoming packets for that class at node B. Node B can also reduce the value stored in the N field to n1 and mark other packets exiting the node with the new value for the N field. Again, this is based on the presumption that if there is congestion on a link, then adjacent links are also likely to be congested.

### Load Imbalance Detection and Correction

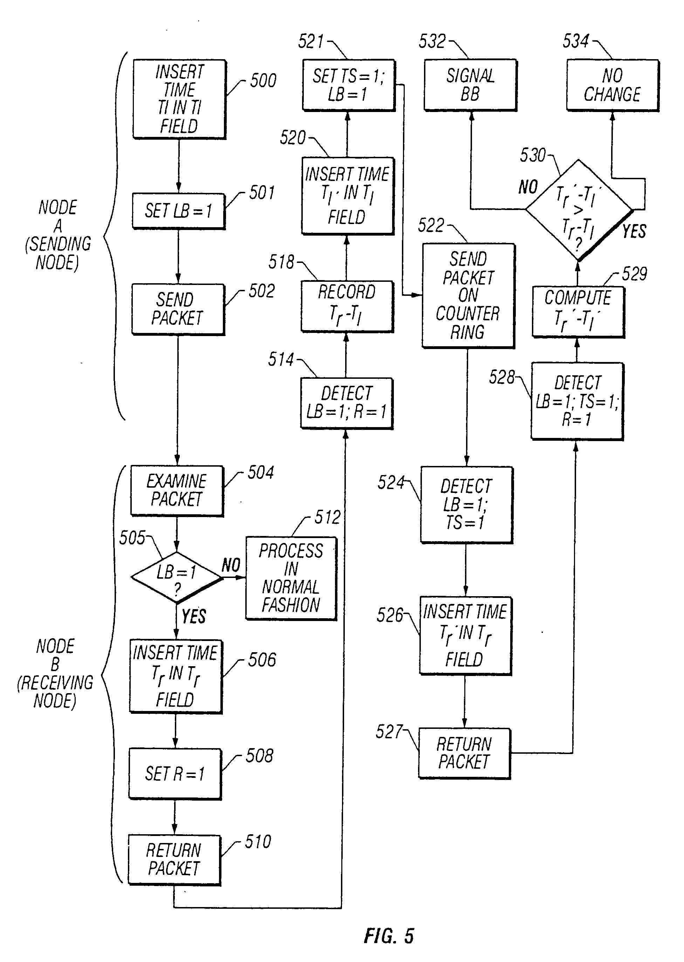

FIG. 5 is a flowchart of an exemplary load imbalance detection and correction feature of the signaling mechanism of the present invention. Again, it will be assumed for the sake of example that traffic goes from node A to node B via the link α. It will also be assumed that load balancing is performed periodically at predetermined times. Accordingly, in step 500, at some predetermined time, node A inserts the time Tl into Tl field of a packet and in step 501 sets the LB field to 1. In step 502, the packet is sent to Node B. In step 504, node B examines the packet and in step 505 determines whether the LB field is set to 1. If so, the time Tr is inserted into the Tr field of the packet in step 506, the R field is set to 1 in step 508, and the packet is returned to node A in step 510. Otherwise, the packet is processed in the usual fashion in step 512.

From step 510, execution proceeds to step 514, in which node A examines the received packet and determines that the LB field is set to 1, indicating that the packet must be inspected for load balancing purposes, and that the R field has been set to 1, indicating that the packet has been received on the reverse ring. In step 518, node A records the value Tr-Tl for the given class. It will be noted that if there are three traffic classes and two rings, each node will maintain six table entries of Tr-Tl values.

In step 520, node A updates the time stored in the Tl field with a new time (Tl') and sets the TS and LB fields to 1 in step 521. In step 522, node A sends the packet back,to node B, but this time via links a-b-c-d. In step 524, node B receives the packet on link d and determines that the packet is a test packet (TS=1), therefore node B need not process it, and that it must be inspected for load balancing (LB=1). In step 526, node 'B updates the time value stored in the Tr field with a new time (Tr') and sends the packet back to node A on links β-γ-δ-ε with TS=1, LB=1, and R=1 in step 527. In step 528, node A receives the packet and detects TS=1, LB=1, and R=1. In step 529, node A computes Tr'-Tl'. In step 530, node A determines whether Tr'-Tl' is less than Tr-Tl. If so, indicating that the path comprising links a-b-c-d- has a smaller delay than the path comprising the link α, then in step 532, node A signals to the BB to (1) re-route some or all of the existing traffic onto links a-b-c-d and/or (2) admit new incoming flows to node A on links a-b-c-d. If it is determined that Tr'-Tl' is not less than Tr-Tl, no changes are made (step 534).

Delay criteria for load balancing need to be checked periodically, or whenever there is a link failure, or when a new flow enters the network (optional). Each node performs load balancing at periodic time intervals (e.g., every five minutes) skewed with respect to other nodes. For example, start with one ring, go through each of the nodes for class 1 traffic, then all of the nodes for class 2 traffic, then all of the nodes for class 3 traffic, and so on. Load balancing is also required when there is a link failure. Any node that detects failure on the ring could set the LD field as follows:
- LD=00: No failure
- LD=01: Outer ring failure
- LD=10: Inner ring failure
- LD=11: Both rings failure

Nodes examine the LD field and upon detecting ring failure will initiate a load balancing operation, as described above with reference to FIG. 5.

### Lack of Fairness Detection and Correction

As previously indicated, the problem of lack of fairness is the result of traffic from upstream nodes "starving" traffic of the same class from downstream nodes.

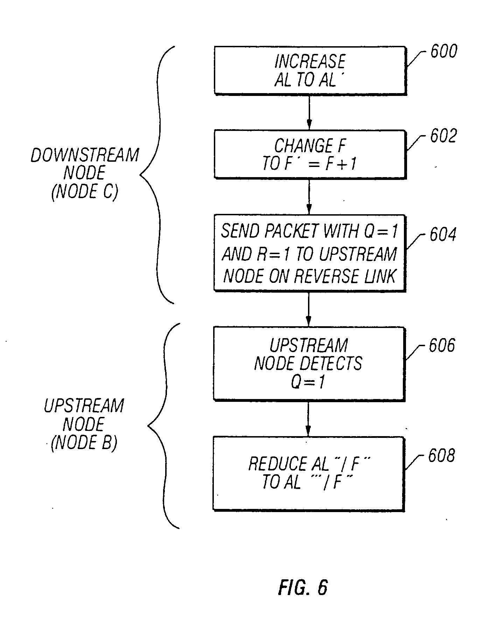

FIG. 6 is a flowchart illustrating an exemplary lack of fairness detection and correction methodology of the signaling mechanism of the present invention. It will be assumed that nodes A and B are sending data traffic, specifically F flows, to node D via links α-β-γ and β-γ, respectively. At this point, a new flow enters the network at node C. In steps 600 and 602, at node C, the BB increases AL to AL' and increase F to F'=F+1. Alternatively, the BB conveys this information to the RPR layer and the RPR layer at node C replaces AL and F with AL' and F' for all packets belonging to a given class, as indicated in the PT field.

In step 604, node C sends a packet with the Q field set to 1, indicating that the packet is meant to be examined for fairness, and the R field set to 1, indicating that the packet is being sent on a reverse ring, to the immediately preceding upstream node (node B) on the reverse link d. In step 606, Upon receipt by node B of the packet, node B detects Q=1 and recognizes that it is examining the packet for fairness purposes. In step 608, node B signals for the flow rate for each of the flows for the class to be reduced from AL"/F" to AL"'/F", where AL">AL"' and F" is the number of flows entering node B. This may be accomplished by node B sending a packet to a policer at layer 3 (if it exists) to reduce the flow rate for each of the flows from AL"/F" to AL"'/F". If a policer at layer 3 does not exist, this may be accomplished by node B sending a packet to the BB to reduce flow rate for each of the flows from AL"/F" to AL"'/F" (for a given class) and/or admit to the RPR only those new incoming flows whose peak rates are less than AL"'/F". The specific values of AL, AL', AL", and AL"' may be determined by the BB 330.

Based upon the foregoing Detailed Description, it should be readily apparent that the present invention advantageously provides an innovative and efficient solution for detecting and correcting congestion, load imbalance, and lack of fairness in an RPR. In particular, the present invention obviates the need for an explicit control channel or separate control packets by using the data bearer packets and the dual counter-rotating ring structure of the RPR to piggyback control signaling information. The signaling mechanism requires minimal computation and minimal storage at the nodes and is insensitive to the number of nodes in the RPR, and therefore scales well with increase in the number of nodes.

It is believed that the operation and construction of the present invention will be apparent from the foregoing Detailed Description. While the exemplary embodiments of the invention shown and described have been characterized as being preferred, it should be readily understood that various changes and modifications could be made therein without departing from the scope of the present invention as set forth in the following claims.

## Claims

1. A method of implementing an in-band signaling mechanism in a resilient packet ring ("RPR") network comprising a plurality of nodes and first and second counter-rotating rings each comprising a plurality of links for carrying information between the nodes, the method comprising the step of: .
transmitting a data packet on the first ring of the RPR network, wherein the data packet includes at least one field requesting information on traffic flow from a downstream node; and
receiving the data packet on the second ring wherein the at least one field indicates the status of traffic flow in response to the request for information.

2. A method of implementing an in-band signaling mechanism in a resilient packet ring ("RPR") network comprising a plurality of nodes and first and second counter-rotating rings each comprising a plurality of links for carrying information between the nodes, the method comprising the step of:
including in each packet transmitted on the RPR network a header comprising at least one fairness specific field for use in detecting and correcting lack of fairness among the nodes, at least one load balancing specific field for use in detecting and correcting load imbalances between the rings, at least one congestion control specific field for use in detecting and alleviating congestion on a ring, and at least one common field for use in detecting and correcting lack of fairness, load imbalance, and congestion in the RPR.

3. The method of claim 2 wherein the at least one fairness specific field is selected from the group consisting of a field for indicating that a lack of fairness has been detected between two nodes and a field for indicating a number of flows belonging to a specified class of service at a node.

4. The method of claim 2 wherein the at least one load balancing specific field is selected from a group consisting of a field for indicating that the packet is a test packet, a field for indicating that the packet must be inspected for load balancing purposes, and a field for indicating failure on one or more links connected to a node.

5. The method of claim 2 wherein the at least one congestion control specific field is selected from a group consisting of a field for indicating that congestion has been detected with respect to a given class of service and a field for indicating a frequency with which packets are to be marked by a node for congestion control inspection purposes.

6. The method of claim 2 wherein the at least one common field is selected from a group consisting of a field for indicating a class of service of the packet, a field for indicating available bandwidth for the class of service of the packet, a field for indicating an allocated bandwidth for the class of service of the packet, a field for indicating a time at which the packet left a first node destined for a second node, a field for indicating a time at which the packet was received at the second node, a field for indicating that the packet is to be time stamped for the class of service; and a field for indicating that the packet has been received on a counter ring.

7. The method of claim 2 wherein the RPR network is a wavelength division multiplex RPR ("WDMRPR").

8. The method of claim 7 wherein the first and second rings comprise first and second wavelengths, respectively.

9. A method of implementing an in-band signaling mechanism for detecting and correcting congestion on a first ring of a resilient packet ring ("RPR") network, the method comprising the steps of, for each nth packet of a flow of a first class of service at a first node:
time stamping the packet with a first time indicative of a time the packet is sent to a second node;
sending the packet to the second node on a first link between the first and second nodes, the first link comprising a portion of the first ring;
upon receipt by the second node of the packet, time stamping the packet with a second time indicative of a time the packet was received at the second node;
calculating a difference between the first and second times; and
responsive to the difference being greater than a predetermined threshold, signaling to the first node that congestion has been detected on the first link between the first and second nodes.

10. The method of claim 9 further comprising, prior to the step of time stamping the packet with a first time indicative of a time the packet is sent to a second node, the step of setting a designated bit in a header of the packet.

11. The method of claim 9 wherein the step of time stamping is performed by indicating a time in a designated field of a header of the packet.

12. The method of claim 9 further comprising the steps of:
responsive to the difference being greater than the predetermined threshold, signaling a BB to reduce the available bandwidth for the first class of service to reduce the number of new flows admitted on the first link between the first and second nodes; and
responsive to the signaling, reducing the token bucket rate at the first node for the first class of service.

13. The method of claim 9 further comprising the step of, responsive to the difference being greater than the predetermined threshold, reducing n at the first node, thereby increasing the number of packets of traffic of the first class of service that are time stamped with a first time.

14. The method of claim 9 further comprising the step of reducing the token bucket rate at the second node for the first class of service responsive to detection of congestion on the first link.

15. The method of claim 9 further comprising the steps of, responsive to the difference being less than the predetermined threshold, signaling a BB to increase the available bandwidth for the first class of service to increase the number of new flows admitted on the first link between the first and second nodes, and increasing the token bucket rate at the first node for the first class of service.

16. The method of claim 9 wherein the step of signaling comprises the steps of:
setting a bit in a header of the packet to indicate to the first node that congestion has been detected on the first link; and
sending the packet back to the first node on a second link between the first and second nodes, the second link comprising a portion of a second ring of the RPR, wherein the second link is a reverse link of the first link.

17. The method of claim 9 wherein the RPR network is a wavelength division multiplex RPR ("WDMRPR").

18. The method of claim 17 wherein the first and second rings comprise first and second wavelengths, respectively.

19. A method of implementing an in-band signaling mechanism for detecting and correcting load imbalance between first and second counter-rotating rings of a resilient packet ring ("RPR") network comprising a plurality of nodes, the method comprising the steps of:
time stamping a packet at a first node with a first time value indicative of a time the packet is sent from the first node to a second node via the first ring;
sending the packet to the second node via the first ring;
at the second node, time stamping the packet with a second time value indicative of a time the packet is received by the second node via the first ring;
returning the packet to the first node via the second ring;
at the first node, recording a difference between the first and second time values;
time stamping the packet at the first node with a third time value indicative of a time the packet is sent from the first node to the second node via the second ring;
sending the packet to the second node via the second ring;
at the second node, time stamping the packet with a fourth time value indicative of a time the packet is received by the second node via the second ring;
returning the packet to the first node via the first ring;
at the first node, recording a difference between the third and fourth time values; and
responsive to a determination that an absolute value of the difference between the third and fourth time values is less than an absolute value of the difference between the first and second time values, signaling a bandwidth broker ("BB") perform load balancing between the first and second rings.

20. The method of claim 19 further comprising, prior to the step of sending the packet to the second node via the first ring, the step of setting a designated bit in a header of the packet for indicating to the second node that the packet is to be examined for load balancing purposes.

21. The method of claim 19 further comprising, prior to the step of returning the packet to the first node via the second ring, the step of setting a designated bit in a header of the packet for indicating to the first node that the packet was sent via a counter ring.

22. The method of claim 19 further comprising, prior to the step of sending the packet to the second node via the second ring, the step of setting a designated bit in a header of the packet for indicating to the second node that the packet is a test packet.

23. The method of claim 19 wherein the step of time stamping is performed by indicating a time in a designated field of a header of the packet.

24. The method of claim 19 wherein the step of signaling the BB to perform load balancing comprises the step of signaling the BB to reroute some of the existing traffic via the second ring.

25. The method of claim 19 wherein the step of signaling the BB to perform load balancing comprises the step of signaling the BB to admit new incoming flows to the first node on the second ring.

26. The method of claim 19 wherein load balancing is performed at periodic intervals.

27. The method of claim 19 wherein load balancing is performed responsive to failure of one or more of the rings.

28. The method of claim 19 wherein load balancing is performed when a new flow enters the RPR network.

29. The method of claim 28 wherein failure of one or more of the rings is indicated in a designated field of a header of the packet.

30. The method of claim 19 wherein the RPR network is a wavelength division multiplex RPR ("WDMRPR").

31. The method of claim 30 wherein the first and second rings comprise first and second wavelengths, respectively.

32. A method of using an in-band signaling mechanism for detecting and correcting a lack of fairness between an upstream node and a downstream node with respect to traffic of a first class of service in a resilient packet ring ("RPR") network comprising first and second two counter-rotating rings, the method comprising the steps of:
causing a bandwidth broker ("BB") to increase the allocated bandwidth and number of admissible flows for the first class of service at the downstream node; and
signaling the upstream node to reduce the amount of traffic of the first class of service being sent from the upstream node to the downstream node.

33. The method of claim 32 wherein the step of signaling the upstream node further comprises the step of signaling the BB to decrease a flow rate for each flow of the first class of service at the upstream node to a predetermined value.

34. The method of claim 32 wherein the step of signaling the upstream node further comprises the step of signaling to the BB to admit only new flows for the first class of service having a peak rate of less than a selected value.

35. The method of claim 32 wherein the step of signaling the upstream node comprises the step of setting a designated bit in a header of the packet.

36. The method of claim 32 wherein the RPR network is a wavelength division multiplex RPR ("WDMRPR").

37. The method of claim 36 wherein the first and second rings comprise first and second wavelengths, respectively.

38. An in-band signaling mechanism for detecting and correcting congestion on a first ring of a resilient packet ring ("RPR") network, the mechanism comprising:
means for time stamping each nth packet of a flow of a first class of service at a first node with a first time indicative of a time the packet is sent to a second node;
means for sending the packet to the second node on a first link between the first and second nodes, the first link comprising a portion of the first ring;
means for time stamping the packet with a second time indicative of a time the packet was received at the second node upon receipt by the second node of the packet;
means for calculating a difference between the first and second times; and
means responsive to the difference being greater than a predetermined threshold for signaling to the first node that congestion has been detected on the first link between the first and second nodes.

39. The mechanism of claim 38 wherein the RPR network is a wavelength division multiplex RPR ("WDMRPR") .

40. The mechanism of claim 39 wherein the first ring comprises a first wavelength.

41. An in-band signaling mechanism for detecting and correcting load imbalance between first and second counter-rotating rings of a resilient packet ring ("RPR") network comprising a plurality of nodes, the mechanism comprising:
means for time stamping a packet at a first node with a first time value indicative of a time the packet is sent from the first node to a second node via the first ring;
means for sending the packet to the second node via the first ring;
means for time stamping the packet with a second time value indicative of a time the packet is received by the second node via the first ring;
means for returning the packet to the first node via the second ring;
means for recording a difference between the first and second time values;
means for time stamping the packet at the first node with a third time value indicative of a time the packet is sent from the first node to the second node via the second ring;
means for sending the packet to the second node via the second ring;
means for time stamping the packet with a fourth time value indicative of a time the packet is received by the second node via the second ring;
means for returning the packet to the first node via the first ring;
means for recording a difference between the third and fourth time values; and
means responsive to a determination that an absolute value of the difference between the third and fourth time values is less than an absolute value of the difference between the first and second time values for signaling a bandwidth broker ("BB") perform load balancing between the first and second rings.

42. The mechanism of claim 41 wherein the RPR network is a wavelength division multiplex RPR ("WDMRPR").

43. The mechanism of claim 42 wherein the first and second rings comprise first and second wavelengths, respectively.

44. An in-band signaling mechanism for detecting and correcting a lack of fairness between an upstream node and a downstream node with respect to traffic of a first class of service in a resilient packet ring ("RPR") network comprising first and second two counter-rotating rings, the mechanism comprising:
means for causing a bandwidth broker ("BB") to increase the allocated bandwidth and number of admissible flows for the first class of service at the downstream node; and
means for signaling the upstream node to reduce the amount of traffic of the first class of service being sent from the upstream node to the downstream node.

45. The mechanism of claim 44 wherein the RPR network is a wavelength division multiplex RPR ("WDMRPR").

46. The mechanism of claim 45 wherein the first and second rings comprise first and second wavelengths, respectively.
